(19) Europäisches Patentamt
European Patent Office
Office européen des brevets

(11) **EP 2 802 928 B1**

(12) **EUROPÄISCHE PATENTSCHRIFT**

(45) Veröffentlichungstag und Bekanntmachung des Hinweises auf die Patenterteilung:
**03.05.2017  Patentblatt 2017/18**

(21) Anmeldenummer: **13700515.3**

(22) Anmeldetag: **08.01.2013**

(51) Int Cl.:
*G03B 21/20* (2006.01)          *H04N 9/31* (2006.01)
*G02B 27/26* (2006.01)          *G02B 5/30* (2006.01)
*G02B 27/28* (2006.01)

(86) Internationale Anmeldenummer:
**PCT/EP2013/050227**

(87) Internationale Veröffentlichungsnummer:
**WO 2013/104628 (18.07.2013 Gazette 2013/29)**

(54) **PROJEKTIONSVORRICHTUNG**

PROJECTION DEVICE

DISPOSITIF DE PROJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.01.2012  DE 102012200407**

(43) Veröffentlichungstag der Anmeldung:
**19.11.2014  Patentblatt 2014/47**

(73) Patentinhaber: **OSRAM GmbH**
**80807 München (DE)**

(72) Erfinder: **KHRUSHCHEV, Sergey**
**93049 Regensburg (DE)**

(56) Entgegenhaltungen:
**EP-A2- 1 235 314          WO-A1-2011/153801**
**DE-A1-102006 010 969          US-A1- 2003 117 595**
**US-A1- 2008 174 868          US-A1- 2009 059 172**
**US-A1- 2010 110 386          US-A1- 2011 273 770**

Bemerkungen:
Die Akte enthält technische Angaben, die nach dem Eingang der Anmeldung eingereicht wurden und die nicht in dieser Patentschrift enthalten sind.

**Beschreibung**

**Technisches Gebiet**

Die vorliegende Erfindung betrifft eine Projektionsvorrichtung mit mindestens einer ersten Laservorrichtung zur Abgabe einer ersten Strahlung einer ersten Polarisationsrichtung und mindestens einer zweiten Laservorrichtung zur Abgabe einer zweiten Strahlung der ersten Polarisationsrichtung. Sie betrifft überdies ein Verfahren zum Betreiben einer derartigen Projektionsvorrichtung.

**Stand der Technik**

Eine der großen Herausforderungen bei Bildprojektion ist die Darstellung von dreidimensionalen Bildern mittels stereoskopischer Verfahren. Dabei sollen das linke und rechte Auge unterschiedliche Bilder wahrnehmen. Insgesamt soll eine derartige Projektionsvorrichtung kostengünstig zu realisieren sein und sich durch hohe Robustheit auszeichnen. Insbesondere bei so genannten Pico-Projektoren ist deshalb eine 3D-Projektion nur schwierig zu realisieren. Pico-Projektoren werden insbesondere für den Einbau in Mobiltelefone und andere mobile Telekommunikationsgeräte benötigt.

Bekannte 3D-Projektionsverfahren nutzen zu diesen Zweck spezielle Brillen. So werden beispielsweise so genannte Shutterbrillen verwendet, wobei abwechselnd die Bilder der zwei Kanäle, das heißt des Kanals für das rechte Auge und des Kanals für das linke Auge, auf der Projektionsfläche dargestellt werden und zusätzlich synchronisiert zur Bildprojektion abwechselnd das linke beziehungsweise das rechte Auge abgedunkelt werden. Hier kann es aber sehr leicht zu Flimmer-Erscheinungen kommen, falls die Bildfrequenz zu niedrig ist. Außerdem benötigt eine derartige Brille eine eigene Energieversorgung.

Bei einem zweiten bekannten Verfahren sind auf den beiden Brillengläsern unterschiedliche Polarisationsfilter aufgebracht, um den jeweiligen Lichtkanal zu filtern. Die beiden verwendeten Polarisationsfilter weisen beim linearen Polarisationsverfahren eine gekreuzte Polarisationsachse auf, das heißt die beiden Polarisationsrichtungen stehen senkrecht aufeinander; beim zirkularen Polarisationsverfahren sind die Polarisierungen der beiden Brillengläser gegensinnig. So lässt sich alleine über die Polarisation die Bildinformation für jedes Auge festlegen. Dadurch lassen sich im Prinzip zwei Bilder gleichzeitig darstellen und die Wahrscheinlichkeit für Flimmereffekte ist gleich null. Im Stand der Technik wird ein derartiges Verfahren beispielsweise in der Kinoprojektion verwendet. Dabei werden üblicherweise zwei Projektoren eingesetzt, die jeweils mindestens eine Entladungslampe aufweisen. Vor jedem Projektor wird ein entsprechendes Polarisationsfilter gesetzt. Ein derartiges Verfahren beansprucht viel Platz und ist deshalb in kleinen Projektoren, beispielsweise für Mobiltelefone und andere mobile Kommunikationsgeräte, nicht einsetzbar.

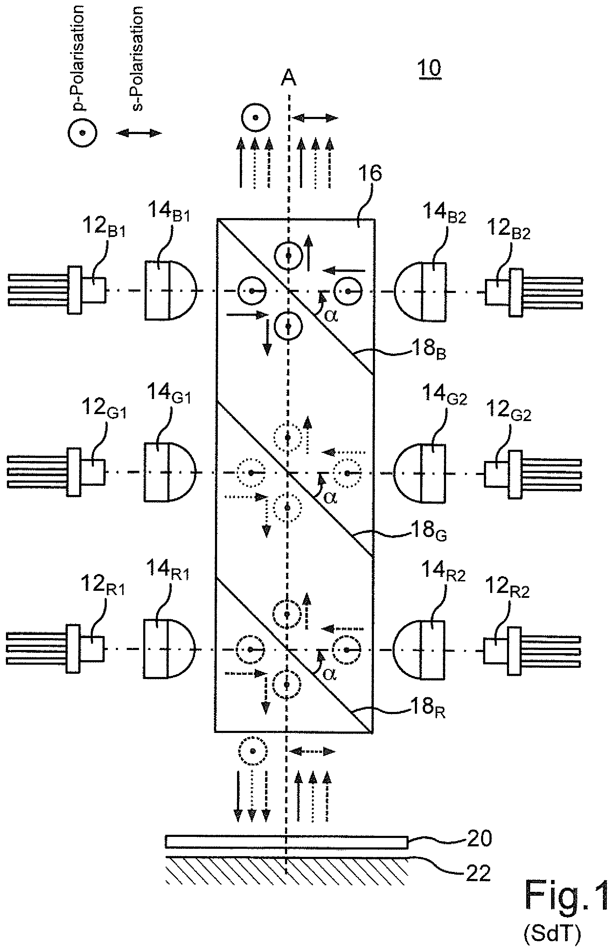

Zum Stand der Technik wird weiterhin verwiesen auf die nachveröffentlichte deutsche Anmeldung derselben Anmelderin wie die vorliegende Anmeldung, Aktenzeichen 10 2011 087 184.5, die eine Projektionsvorrichtung vorschlägt, die in Fig. 1 dargestellt ist. Eine derartige Projektionsvorrichtung 10 weist beispielsweise sechs Laserdioden 12 auf. Dabei sind jeweils Laserdioden 12, die eine Strahlung im gleichen Wellenlängenbereich emittieren, einander gegenüberliegend angeordnet. Vorliegend emittieren die Laserdioden $12_{B1}$ und $12_{B2}$ Strahlung im blauen Wellenlängenbereich, die Laserdioden $12_{G1}$ und $12_{G2}$ Strahlung im grünen Wellenlängenbereich und die Laserdioden $12_{R1}$ und $12_{R2}$ Strahlung im roten Wellenlängebereich. Jeder Laserdiode $12_{B1}$ bis $12_{R2}$ ist eine Linse $14_{B1}$ bis $14_{R2}$ zugeordnet. Zwischen den jeweils gegenüberliegenden Laserdioden 12 ist ein Prisma 16 angeordnet. Dieses umfasst vorliegend drei polarisationsabhängige und wellenlängenabhängige Spiegelvorrichtungen 18, wobei eine erste $18_B$ zwischen den Laserdioden $12_{B1}$ und $12_{B2}$ angeordnet ist, eine zweite $18_G$ zwischen den Laserdioden $12_{G1}$ und $12_{G2}$ und eine dritte $18_R$ zwischen den Laserdioden $12_{R1}$ und $12_{R2}$. Die jeweilige wellenlängenabhängige, polarisationsabhängige Spiegelvorrichtung schließt mit der Verbindungslinie zwischen den jeweiligen Laserdioden einen Winkel von $\alpha = 45°$ ein.

Die von den jeweiligen Laserdioden 12 abgegebene Strahlung ist im dargestellten Beispiel s-polarisiert. Die wellenlängenabhängigen, polarisationsabhängigen Spiegelvorrichtungen 18 sind im dargestellten Beispiel ausgelegt, s-polarisierte Strahlung zu reflektieren und p-polarisierte Strahlung passieren zu lassen. Dieser Effekt tritt bei der jeweiligen polarisationsabhängigen Spiegelvorrichtung 18 nur in einem dafür vorgesehenen Wellenlängenbereich auf. Strahlung anderer Wellenlängen können die wellenlängenabhängige, polarisationsabhängige Spiegelvorrichtung 18 im Wesentlichen reflexionsfrei, d.h. von unvermeidlichen minimalen Verlusten abgesehen, passieren.

Von den Laserdioden mit dem Index "2" abgegebene Strahlung wird demnach nach einer Reflexion an der jeweiligen Spiegelvorrichtung 18 in Richtung Ausgang A der Projektionsvorrichtung reflektiert. Strahlung von den Laserdioden mit dem Index "1" hingegen wird in eine dazu um 180° entgegengesetzte Richtung reflektiert und zwar in Richtung einer $\lambda/4$-Verzögerungsplatte 20. Die jeweilige Strahlung durchdringt die $\lambda/4$-Verzögerungsplatte 20 und trifft auf eine Spiegelvorrichtung 22 auf, die ausgelegt ist, sämtliche Strahlung in den drei angegebenen Wellenlängenbereichen zu reflektieren. Nach der Reflexion an der Spiegelvorrichtung 22 passiert die Strahlung die $\lambda/4$-Verzögerungsplatte 20 erneut. Aufgrund des zweimaligen Durchlaufens der $\lambda/4$-Verzögerungsplatte 20 hat sich die Polarisationsrichtung von "s" nach "p" geändert. Die nunmehr p-polarisierte Strahlung tritt wieder in das Prisma 16 ein, wobei die Strahlung nunmehr die wellenlängenabhängigen, polarisationsabhängigen Spiegelvorrichtungen 18 aufgrund ihrer p-Polarisation ungehindert in Richtung Ausgang A passieren kann.

Am Ausgang A steht demnach ein Laserstrahl zur Verfügung, bei dem bezogen auf den jeweiligen Wellenlängenbereich s- und p-polarisierte Laserstrahlen überlagert sind. Am Ausgang A kann eine so genannte Mikrospiegelanordnung, beispielsweise eine MEMS-Anordnung (MEMS = Mikro-ElektroMechanisches System), vorgesehen sein, um die Summenstrahlung auf eine Projektionsfläche zu projizieren. Ein die Projektionsfläche betrachtender Benutzer, der eine kreuzpolarisierte Filterbrille trägt, kann eine farbige 3D-Darstellung wahrnehmen.

Wenngleich in dem dargestellten Beispiel jeweils drei gegenüberliegende Laserdioden verwendet wurden, lässt sich die Idee auch mit nur einem Paar gegenüberliegender Laserdioden oder auch einer größeren Anzahl gegenüberliegender Laserdioden realisieren. Ebenso kann die von den Laserdioden abgegebene Strahlung p-polarisiert sein, so dass ihre Polarisationsachse nach zweimaligem Durchlaufen der λ/4-Verzögerungsplatte um 90° gedreht ist. Die zuvor p-polarisierte Strahlung ist nunmehr s-polarisiert. Damit lässt sich das gleiche Ergebnis erzielen, wie mit dem in Fig. 1 dargestellten Beispiel. Weiterhin sind andere Arten zur Modifikation der Polarisation anstelle der λ/4-Verzögerungsplatte möglich, beispielsweise 3λ/4-Verzögerungsplatten und dergleichen.

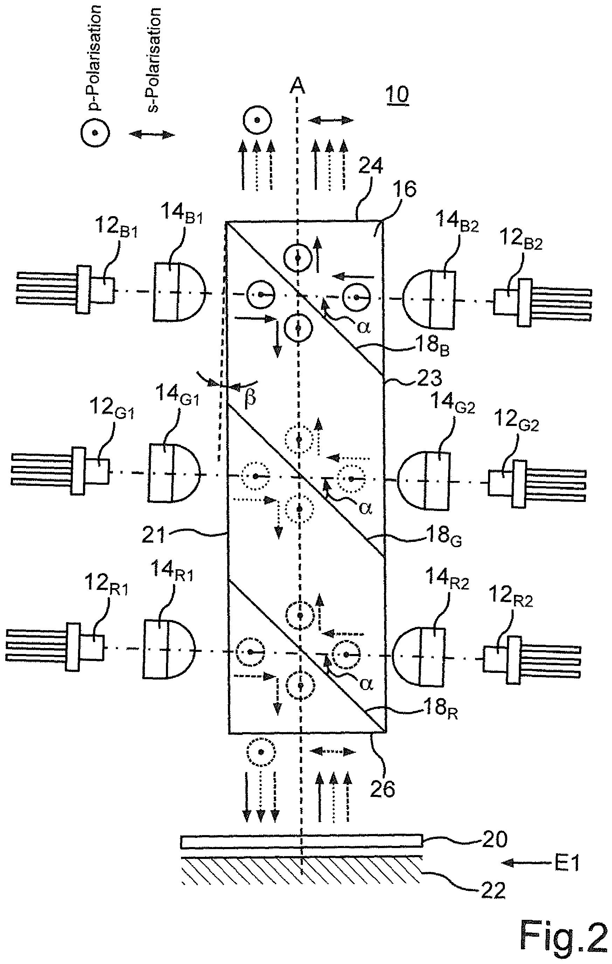

Gemäß einem anderen Realisierungsbeispiel können die beiden einander gegenüberliegend angeordneten Laserdioden lateral versetzt sein, das heißt, nicht auf einer gemeinsamen Achse angeordnet sein. Dadurch kann eine gegenseitige Beeinflussung der Laserdioden weitgehend ausgeschlossen werden. Die λ/4-Verzögerungsplatte kann unmittelbar auf dem Prisma aufgebracht sein. Die Spiegelvorrichtung kann als Prisma mit verspiegelter Außenfläche ausgeführt sein, wobei das Prisma unmittelbar auf der λ/4-Verzögerungsplatte aufgebracht sein kann. Durch geeignete Wahl der Winkel des Prismas lassen sich, siehe hierzu Fig. 2 der unter dem internen Aktenzeichen 201117170 eingereichten Anmeldung der vorliegenden Anmelderin, die jeweiligen Strahlen überlagern und in dieser überlagerten Form am Ausgang A bereitstellen. Selbstverständlich kann auch ein derartiges Beispiel durch weitere Paare von Laservorrichtungen erweitert werden.

Generell, das heißt unabhängig von der gewählten Realisierung, lässt sich Folgendes anmerken: Die jeweiligen Laservorrichtungen können ihre Strahlung gleichzeitig abgeben. Alternativ oder in Ergänzung dazu können die Laservorrichtungen ihre Strahlung auch zeitlich sequentiell versetzt abgeben, beispielsweise mit einer vorgebbaren Taktrate.

Die Verzögerungsplatte kann auch ohne Beabstandung, das heißt direkt am Prisma angesetzt sein. Anstelle einer plattenförmigen Struktur kann auch eine Verzögerungsfolie verwendet werden, beispielsweise eine λ/4-Verzögerungsfolie mit einer Dicke von ca. 50 μm.

Die Spiegelvorrichtung kann als hochreflektierender Spiegel ausgestaltet und beabstandet zur Verzögerungsplatte angeordnet sein, oder beispielsweise als hochreflektierende Beschichtung direkt auf der den Laservorrichtungen abgewandten Seite der Verzögerungsplatte auf- oder angebracht sein.

Die Spiegelvorrichtung kann auch als ein Prisma ausgestaltet sein.

Die Laservorrichtungen sind nicht auf die Verwendung von Laserdioden beschränkt. Vielmehr können sie alle Arten von polarisierten Laserlichtquellen umfassen, also insbesondere auch Gaslaser, Festkörperlaser oder Faserlaser. Die Erfinder der vorliegenden Anmeldung haben festgestellt, dass es bei Realisierungen der erwähnten Projektionsvorrichtungen zu einem instabilen Betrieb der beteiligten Laserdioden kommen kann.

Es wird ebenfalls auf das Dokument US 2008/0174868 verwiesen, das eine Projektionsvorrichtung offenbart.

## Darstellung der Erfindung

Die Aufgabe der vorliegenden Erfindung besteht grundsätzlich darin, eine eingangs genannte Projektionsvorrichtung beziehungsweise ein eingangs genanntes Verfahren derart weiterzubilden, dass die Darstellung von 3-dimensionalen Bildern auch in sehr kleinen Projektoren, insbesondere Pico-Projektoren, ermöglicht wird. Im Hinblick auf die in der mit dem Aktenzeichen 10 2011 087 184.5 beim Deutschen Patent- und Markenamt eingereichten Anmeldung vorgestellten Projektionsvorrichtungen besteht die Aufgabe darin, die dort vorgestellten Projektionsvorrichtungen beziehungsweise das dort vorgestellte Verfahren derart weiterzubilden, dass ein möglichst stabiler Betrieb der beteiligten Laservorrichtungen ermöglicht wird. Diese Aufgabe wird gelöst durch eine Projektionsvorrichtung mit den Merkmalen von Patentanspruch 1.

Der vorliegenden Erfindung liegt die Erkenntnis zugrunde, dass es zu einem instabilen Betrieb der Laservorrichtungen kommen kann, wenn der von externen Hohlraumresonatoren her bekannte Effekt in laserbasierten Vorrichtungen auftritt. Ganz allgemein ist die Betriebsstabilität einer Laserquelle ein wichtiger Teil der Entwicklung von Laserprojektoren. Dabei besteht ein Laser aus zwei Spiegeln, die ein aktives Medium begrenzen. Eine derartige Anordnung ist unter der Bezeichnung Laserresonator (Hohlraumresonator) bekannt.

Da Licht wellenförmig ist, kommt es zur Ausbildung stehender Wellen oder Moden zwischen den Spiegeln, wenn Licht zwischen den Spiegeln des Hohlraums hin- und herreflektiert wird, sodass sich das Licht konstruktiv oder destruktiv selbst überlagert.

Im Zusammenhang mit einem Hohlraumresonator kann nun ein weiterer, externer Spiegel verwendet werden, der im Laserstrahl außerhalb des Resonanzhohlraums angeordnet ist. Dies führt zur Ausbildung einer stehenden Welle, die sich mit der Welle im Laserresonator entweder konstruktiv oder destruktiv überlagert. Wenn die Phase des Lichts im externen Hohlraum entgegengesetzt zur Phase der stehenden Welle im Laserresonator ist, dann findet eine destruktive Überlagerung statt und die Lichterzeugung wird gestört. Dies resultiert in einem instabilen Betrieb der Laservorrichtung.

Zur Lösung dieses Problems schlagen die Erfinder der vorliegenden Erfindung deshalb vor, durch eine geeignete Auslegung sicherzustellen, dass es zu keinen Rückreflexionen in den Laser-Hohlraumresonator kommt. Bei einer erfindungsgemäßen Projektionsvorrichtung sind demnach die erste und die zweite Laservorrichtung gegenüberliegend angeordnet, wobei die Projektionsvorrichtung weiterhin ein zwischen der ersten und der zweiten Laservorrichtung angeordnetes Prisma mit einer ersten, der ersten Laservorrichtung zugewandten Begrenzungsfläche und einer zweiten, der zweiten Laservorrichtung zugewandten Begrenzungsfläche umfasst. In dem Prisma ist mindestens eine polarisationsabhängige Spiegelvorrichtung angeordnet, die derart ausgebildet ist, dass Strahlung der ersten Polarisationsrichtung nach dem Auftreffen auf die polarisationsabhängige Spiegelvorrichtung reflektiert wird, wobei die polarisationsabhängige Spiegelvorrichtung derart zwischen der ersten und der zweiten Laservorrichtung angeordnet ist, dass die erste und die zweite Strahlung nach Reflexion an der polarisationsabhängigen Spiegelvorrichtung entgegengesetzt zueinander verlaufen. Es ist mindestens eine Polarisationsmodifikationsvorrichtung vorgesehen, wobei die Polarisationsmodifikationsvorrichtung ausgelegt ist, die Polarisationsrichtung von Strahlung derart zu modifizieren, dass sie die polarisationsabhängige Spiegelvorrichtung ohne Reflexion passiert. Überdies ist mindestens eine weitere Spiegelvorrichtung vorgesehen. Die Polarisationsmodifikationsvorrichtung und die weitere Spiegelvorrichtung sind im Strahlengang der zweiten Strahlung nach einem ersten und vor einem zweiten Auftreffen auf die polarisationsabhängige Spiegelvorrichtung angeordnet. Erfindungsgemäß ist vorgesehen, dass die erste Begrenzungsfläche des Prismas mit der optischen Achse der ersten Laservorrichtung einen vorgebbaren Winkel ungleich 90° einschließt und die zweite Begrenzungsfläche des Prismas parallel zur ersten Begrenzungsfläche verläuft. Mit anderen Worten sind die erste und die zweite Begrenzungsfläche geneigt.

Durch diese Maßnahme wird eine Rückreflexion eines kollimierten Strahls in den Laser-Hohlraumresonator verhindert. Störungen können hierdurch zuverlässig vermieden werden, was in einem äußerst stabilen Laserbetrieb resultiert.

Das Prisma weist eine dritte Begrenzungsfläche auf, die der Polarisationsmodifikationsvorrichtung und der weiteren Spiegelvorrichtung zugewandt ist, sowie eine vierte Begrenzungsfläche, die den Ausgang der Projektionsvorrichtung darstellt.

Ausgehend hiervon können zwei Ausführungsformen wie folgt ausgestaltet sein:

Bei einer ersten, nicht beanspruchten Ausführungsform ist durch die Erstreckungsrichtung der Polarisationsmodifikationsvorrichtung und der weiteren Spiegelvorrichtung eine erste vorgebbare Ebene definiert. Die dritte Begrenzungsfläche verläuft senkrecht zur ersten und der zweiten Begrenzungsfläche. Die erste vorgebbare Ebene ist dabei so gewählt, dass die von der weiteren Spiegelvorrichtung zurückreflektierte zweite Strahlung an der Stelle in das Prisma eintritt, an der sie aus dem Prisma ausgetreten ist. Ein kleiner Nachteil dieser Ausführungsform besteht darin, dass der am Ausgang des Prismas bereitgestellte Strahl ebenfalls geneigt ist. Aus diesem Grund verläuft die erste vorgebbare Ebene nicht parallel zur optischen Achse der Laservorrichtungen.

Bei einer zweiten beanspruchten Ausführungsform ist deshalb vorgesehen, dass durch die Erstreckungsrichtung der Polarisationsmodifikationsvorrichtung und der weiteren Spiegelvorrichtung eine erste vorgebbare Ebene definiert ist, wobei durch die dritte Begrenzungsfläche eine zweite vorgebbare Ebene definiert ist. Die erste und die zweite vorgebbare Ebene sind dabei derart gewählt, dass die aus dem Prisma in Richtung zur weiteren Spiegelvorrichtung austretende erste Strahlung und die von der weiteren Spiegelvorrichtung zurückreflektierte zweite Strahlung vor Eintritt in das Prisma senkrecht zur optischen Achse der ersten und der zweiten Laservorrichtung verlaufen. Mit anderen Worten ist bei dieser Ausführungsform das Prisma geneigt zwischen den Laservorrichtungen angeordnet, was dazu führt, dass der am Ausgang A bereitgestellte Strahl senkrecht zur optischen Achse der Laservorrichtungen verläuft.

Zu Fig. 1: Bei der in Fig. 1 dargestellten Projektionsvorrichtung 10 trifft der kollimierte Laserstrahl der jeweiligen Laservorrichtung auf die flache Begrenzungsfläche des Prismas 16 auf, wodurch zumindest ein Teil der Strahlung in die jeweilige Laservorrichtung zurückreflektiert wird und zwar aufgrund von Fresnel-Verlusten an der Oberfläche. Bei ungünstiger Auslegung der axialen Entfernung der jeweiligen Laservorrichtung und dem Winkel der jeweiligen Begrenzungsfläche des Prismas kann es zu einem Abbruch der Strahlungserzeugung kommen.

Besonders bevorzugt verläuft demnach auch die vierte parallel zur dritten Begrenzungsfläche, sodass der Ausgangsstrahl senkrecht zur optischen Achse der jeweiligen Laservorrichtungen verläuft.

Der Austrittsflächenwinkel des Prismas beträgt auf der Seite der dritten Begrenzungsfläche und/oder auf der Seite der vierten Begrenzungsfläche bevorzugt zwischen 2° und 3°, insbesondere 2,3°. Der Betrag der Differenz des vorgebbaren Winkels ungleich 90°, den die erste Begrenzungsfläche des Prismas mit der optischen Achse der ersten Laservorrichtung einschließt, und 90° beträgt zwischen 0,1° und 1,5°, bevorzugt zwischen 0,6° und 1,5°. Diese Formulierung trägt dem Umstand Rechnung, dass zur Lösung der Aufgabe das Prisma sowohl in die eine als auch in die entgegengesetzte Richtung gekippt sein kann.

Bevorzugt ist die Polarisationsmodifikationsvorrichtung derart ausgebildet, dass die zweite Strahlung nach mindestens einem zweimaligen Passieren der Polarisationsmodifikationsvorrichtung derart polarisiert ist, dass sie die polarisationsabhängige Spiegelvorrichtung im Wesentlichen ohne Reflexion passiert.

Die polarisationsabhängige Spiegelvorrichtung ist bevorzugt derart angeordnet, dass die zweite Strahlung nach einem ersten Passieren der Polarisationsmodifikationsvorrichtung an der weiteren Spiegelvorrichtung gespiegelt wird, anschließend die Polarisationsmodifikationsvorrichtung ein zweites Mal passiert und nach dem zweiten Passieren ein zweites Mal auf die polarisationsabhängige Spiegelvorrichtung trifft.

Besonders bevorzugt stellt die Polarisationsmodifikationsvorrichtung eine n*λ/4-Platte dar, wobei n ungeradzahlig und insbesondere n=1 ist. Dadurch dreht sich die Polarisationsachse des Strahls bei zweimaligem Durchlaufen der Polarisationsmodifikationsvorrichtung um 90°, weshalb die polarisationsabhängige Spiegelvorrichtung, an der der Strahl zuvor reflektiert wurde, nunmehr ohne Reflexion passiert werden kann.

Es ist insbesondere vorgesehen, dass die zweite Strahlung bevor sie zum zweiten Mal auf die polarisationsabhängige Spiegelvorrichtung trifft, eine Polarisationsrichtung aufweist, die zur ersten Polarisationsrichtung senkrecht ist. Auf diese Weise lassen sich mittels einer kreuzpolarisierten Filterbrille die unterschiedlichen Strahlen besonders einfach dem jeweils zugedachten Auge zuführen.

Die erste Polarisationsrichtung kann beispielsweise eine s-Polarisation sein. Dann ist die zweite Strahlung bevor sie zum zweiten Mal auf die polarisationsabhängige Spiegelvorrichtung trifft, bevorzugt p-polarisiert. Umgekehrt kann vorgesehen sein, dass die erste Polarisationsrichtung eine p-Polarisation ist. Dann ist die zweite Strahlung bevor sie zum zweiten Mal auf die polarisationsabhängige Spiegelvorrichtung trifft, s-polarisiert.

Die vorgestellte erfindungsgemäße Projektionsvorrichtung kann für die monochrome Darstellung als auch für die farbige Darstellung von 3D-Bildern ausgebildet sein. Während für die monochrome Darstellung lediglich eine erste und eine zweite Laservorrichtung vorzusehen sind, sind für farbige Darstellungen n erste Laservorrichtungen und n zweite Laservorrichtungen mit $n \in \mathbb{N}$ vorzusehen. Dabei ist die jeweils i-te erste Laservorrichtung der jeweils i-ten zweiten Laservorrichtung einander gegenüberliegend angeordnet, mit i = 1 bis n. In diesem Zusammenhang ist zwischen der i-ten ersten und der i-ten zweiten Laservorrichtung eine i-te polarisationsabhängige Spiegelvorrichtung angeordnet, mit i = 1 bis n. Die i-te erste Laservorrichtung und die i-te zweite Laservorrichtung sind insbesondere ausgelegt, Strahlung in einem i-ten Wellenlängenbereich abzugeben mit i = 1 bis n.

Bei einer besonders bevorzugten Ausführungsform beträgt n = 3, wobei der erste Wellenlängenbereich im roten Spektrum, der zweite Wellenlängenbereich im grünen Spektrum und der dritte Wellenlängenbereich im blauen Spektrum liegt. Insgesamt sind demnach sechs Laservorrichtungen vorgesehen, die für eine sehr gute farbige Darstellung von 3D-Bildern ausreichen.

Zwischen der jeweiligen Laservorrichtung und der zugeordneten polarisationsabhängigen Spiegelvorrichtung kann eine optische Vorrichtung, insbesondere eine Linse, angeordnet sein. Auf diese Weise wird sichergestellt, dass nahezu die gesamte Ausgangsleistung der jeweiligen Laserdiode für die Darstellung der 3D-Bilder zur Verfügung steht. Eine derartige Vorrichtung zeichnet sich durch einen ausgezeichneten Wirkungsgrad aus.

Selbstverständlich kann die beschriebene erfindungsgemäße Projektionsvorrichtung durch weitere Laservorrichtungen ergänzt werden, denen keine gegenüberliegende Laservorrichtung angeordnet sein muss. Mit solchen zusätzlichen, einzeln positionierten Laservorrichtungen, beispielsweise blau emittierende Laservorrichtungen, lassen sich bestimmte Spektralbereiche, beispielsweise blau, intensitätsmäßig verstärken.

## Kurze Beschreibung der Zeichnungen

Im Nachfolgenden werden nunmehr Ausführungsbeispiele der vorliegenden Erfindung unter Bezugnahme auf die beigefügten Zeichnungen näher beschrieben. Dabei zeigen:

Fig. 1    in schematischer Darstellung eine Projektionsvorrichtung, die in der Anmeldung mit dem internen Aktenzeichen 201117170 der Anmelderin der vorliegenden Anmeldung beschrieben ist;

Fig. 2    in schematischer Darstellung ein erstes, nicht beanspruchtes Ausführungsbeispiel einer Projektionsvorrichtung; und

Fig. 3    in schematischer Darstellung ein Ausführungsbeispiel einer erfindungsgemäßen Projektionsvorrichtung.

**Bevorzugte Ausführung der Erfindung**

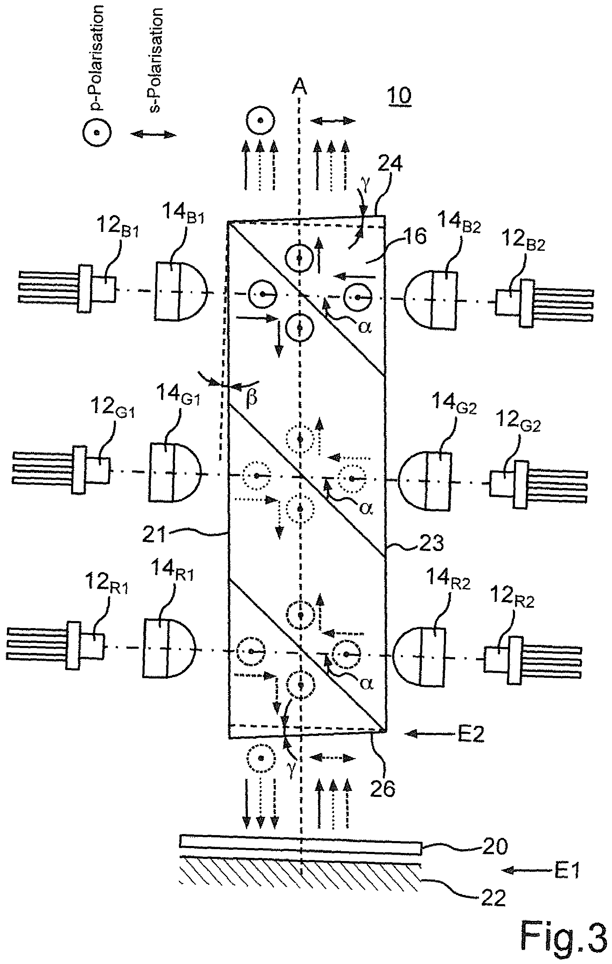

Die mit Bezug auf Fig. 1 eingeführten Bezugzeichen werden für die in den Figuren 2 und 3 dargestellten Ausführungsbeispiele der vorliegenden Erfindung weiterverwendet, sofern sie gleiche und gleichwirkende Bauelemente betreffen.

Bei der in Fig. 2 schematisch dargestellten Ausführungsform einer erfindungsgemäßen Projektionsvorrichtung ist das Prisma 16 gekippt, d.h. ein einem Winkel ungleich 90°, zwischen den Laservorrichtungen 12 angeordnet. Gegenüber der Orientierung des Prismas 16 bei der in Fig. 1 dargestellten Projektionsvorrichtung 10 ist das Prisma 16 um einen Winkel $\beta$ geneigt, wobei $\beta$ bevorzugt bis 1,5° beträgt, insbesondere gleich 0,6° ist. Die den Laservorrichtungen mit dem Index "1" zugewandte Begrenzungsfläche 21 des Prismas 16 nimmt daher mit der optischen Achse dieser Laservorrichtungen nicht mehr einen Winkel von 90° ein, sondern ungleich 90°. Dasselbe gilt für die Begrenzungsfläche 23, die den Laservorrichtungen mit dem Index "2" gegenüberliegt.

Bei dem in Fig. 2 dargestellten Ausführungsbeispiel sind die Begrenzungsflächen 24 und 26 senkrecht zu den Begrenzungsflächen 21 und 23 angeordnet. Der aus dem Prisma 16 in Richtung zur $\lambda$/4-Verzögerungsplatte 20 und zur Spiegelvorrichtung 22 austretende Strahl schließt deshalb gegenüber der optischen Achse der jeweiligen Laservorrichtungen einen Winkel von ungleich 90° ein. Wenn durch die Erstreckungsrichtung der $\lambda$/4-Verzögerungsplatte 20 und der weiteren Spiegelvorrichtung 22 eine erste vorgebbare Ebene E1 definiert ist, dann verläuft die Ebene nicht parallel zur optischen Achse der Laservorrichtungen 12, sondern vielmehr so, dass die von der weiteren Spiegelvorrichtung 22 zurückreflektierte Strahlung an der Stelle in das Prisma 16 eintritt, an der sie aus dem Prisma 16 ausgetreten ist.

Bei dem in Fig. 3 dargestellten Ausführungsbeispiel sind die Begrenzungsflächen 24 und 26 nicht senkrecht zu den Begrenzungsflächen 21 und 23 angeordnet. Vielmehr nehmen sie einen sogenannten Austrittflächenwinkel $\gamma$ gegenüber der gestrichelt eingezeichneten senkrechten Orientierung (vergleiche Fig. 2) ein. Dieser Winkel $\gamma$ (Austrittsflächenwinkel) nimmt in einem Ausführungsbeispiel für einen Kippwinkel $\beta$ von 0,6° und einem Brechungsindex n des für das Prisma 16 verwendeten Glases von 1,52 den Wert 2,32° an. Die auf beiden Seiten des Prismas 16 austretenden Strahlen verlaufen senkrecht zur optischen Achse der Laservorrichtungen 12. Durch die Begrenzungsfläche 26 ist eine zweite vorgebbare Ebene E2 definiert.

Allgemein gilt für den Austrittsflächenwinkel $\gamma$ folgende Beziehung:

$$\sin(\gamma - \arcsin((\sin\beta)/n)) = (\sin(\beta + \gamma)) \cdot (1/n) \, ,$$

wobei $\beta$ der Kippwinkel des Prismas 16 ist, n der Brechungsindex des Glases und $\gamma$ der gesuchte Austrittsflächenwinkel.

Der Brechungsindex n beträgt für Glas mit der Bezeichnung BK7 1,52.

**Patentansprüche**

1. Projektionsvorrichtung (10) mit

 - mindestens einer ersten Laservorrichtung ($12_{B1}$) zur Abgabe einer ersten Strahlung einer ersten Polarisationsrichtung (s; p); und
 - mindestens einer zweiten Laservorrichtung ($12_{B2}$) zur Abgabe einer zweiten Strahlung der ersten Polarisationsrichtung (s; p);

 wobei die erste ($12_{B1}$) und die zweite Laservorrichtung ($12_{B2}$) gegenüberliegend angeordnet sind und wobei die Projektionsvorrichtung (10) weiterhin umfasst:

 - ein zwischen der ersten ($12_{B1}$) und der zweiten Laservorrichtung ($12_{B2}$) angeordnetes Prisma (16) mit einer ersten, der ersten Laservorrichtung ($12_{B1}$) zugewandten Begrenzungsfläche (21) und einer zweiten, der zweiten Laservorrichtung ($12_{B2}$) zugewandten Begrenzungsfläche (23), wobei in dem Prisma (16) mindestens eine polarisationsabhängige Spiegelvorrichtung ($18_B$) angeordnet ist, die derart ausgebildet ist, dass Strahlung der ersten Polarisationsrichtung (s; p) nach dem Auftreffen auf die polarisationsabhängige Spiegelvorrichtung ($18_B$) reflektiert wird, wobei die polarisationsabhängige Spiegelvorrichtung ($18_B$) derart zwischen der ersten ($12_{B1}$) und der zweiten Laservorrichtung ($12_{B2}$) angeordnet ist, dass die erste und die zweite Strahlung nach Reflexion an der polarisationsabhängigen Spiegelvorrichtung ($18_B$) entgegengesetzt zueinander verlaufen;
 - mindestens eine Polarisationsmodifikationsvorrichtung (20), wobei die Polarisationsmodifikationsvorrichtung (20) ausgelegt ist, die Polarisationsrichtung (s; p) von Strahlung derart zu modifizieren, dass sie die polarisationsabhängige Spiegelvorrichtung ($18_B$) ohne Reflexion passiert; und

- mindestens eine weitere Spiegelvorrichtung (22); wobei die Polarisationsmodifikationsvorrichtung (20) und die weitere Spiegelvorrichtung (22) im Strahlengang der ersten Strahlung nach einem ersten und vor einem zweiten Auftreffen auf die polarisationsabhängige Spiegelvorrichtung ($18_B$) angeordnet sind,

**dadurch gekennzeichnet, dass**

die erste Begrenzungsfläche (21) des Prismas (16) mit der optischen Achse der ersten Laservorrichtung ($12_{B1}$) einen vorgebbaren Winkel ungleich 90° einschließt und die zweite Begrenzungsfläche (23) des Prismas (16) parallel zur ersten Begrenzungsfläche (21) verläuft,

das Prisma (16) eine dritte Begrenzungsfläche (26) aufweist, die der Polarisationsmodifikationsvorrichtung (20) und der weiteren Spiegelvorrichtung (22) zugewandt ist, sowie eine vierte Begrenzungsfläche (24), die den Ausgang der Projektionsvorrichtung (10) darstellt

wobei durch die Erstreckungsrichtung der Polarisationsmodifikationsvorrichtung (20) und der weiteren Spiegelvorrichtung (22) eine erste vorgebbare Ebene (E1) definiert ist,

wobei durch die dritte Begrenzungsfläche (26) eine zweite vorgebbare Ebene (E2) definiert ist,

wobei die erste (E1) und die zweite vorgebbare Ebene (E2) derart gewählt sind, dass die dritte Begrenzungsfläche (26) und die vierte Begrenzungsfläche (24) nicht senkrecht zu der ersten (21) und der zweiten (23) Begrenzungsfläche angeordnet sind und,

dass die aus dem Prisma (16) in Richtung zur weiteren Spiegelvorrichtung (22) austretende erste Strahlung und die von der weiteren Spiegelvorrichtung (22) zurückreflektierte zweite Strahlung vor Eintritt in das Prisma (16) senkrecht zur optischen Achse der ersten ($12_{B1}$) und der zweiten Laservorrichtung ($12_{B2}$) verlaufen.

**2.** Projektionsvorrichtung (10) nach Anspruch 1,
**dadurch gekennzeichnet,**
**dass** die vierte Begrenzungsfläche (24) parallel zur dritten Begrenzungsfläche (26) verläuft.

**3.** Projektionsvorrichtung (10) nach einem der Ansprüche 1 oder 2,
**dadurch gekennzeichnet,**
**dass** der Austrittsflächenwinkel ($\gamma$) des Prismas (16) auf der Seite der dritten Begrenzungsfläche (26) und/oder auf der Seite der vierten Begrenzungsfläche zwischen 2° und 3°, insbesondere 2,3°, beträgt.

**4.** Projektionsvorrichtung (10) nach einem der vorhergehenden Ansprüche,
**dadurch gekennzeichnet,**
**dass** der Betrag der Differenz aus dem vorgebbaren Winkel und 90° zwischen 0,1° und 1,5°, bevorzugt zwischen 0,6° und 1,5°, beträgt.

**5.** Projektionsvorrichtung (10) nach einem der vorhergehenden Ansprüche,
**dadurch gekennzeichnet,**
**dass** die Polarisationsmodifikationsvorrichtung (20) derart ausgebildet ist, dass die erste Strahlung nach mindestens einem zweimaligen Passieren der Polarisationsmodifikationsvorrichtung (20) derart polarisiert ist, dass sie die polarisationsabhängige Spiegelvorrichtung ($18_B$) ohne Reflexion passiert.

**6.** Projektionsvorrichtung (10) nach einem der vorhergehenden Ansprüche,
**dadurch gekennzeichnet,**
**dass** die polarisationsabhängige Spiegelvorrichtung ($18_B$) derart angeordnet ist, dass die erste Strahlung nach einem ersten Passieren der Polarisationsmodifikationsvorrichtung (20) an der weiteren Spiegelvorrichtung (22) gespiegelt wird, anschließend die Polarisationsmodifikationsvorrichtung (20) ein zweites Mal passiert, und nach dem zweiten Passieren ein zweites Mal auf die polarisationsabhängige Spiegelvorrichtung ($18_B$) trifft.

**7.** Projektionsvorrichtung (10) nach einem der vorhergehenden Ansprüche,
**dadurch gekennzeichnet,**
**dass** die Polarisationsmodifikationsvorrichtung (20) eine n*lambda/4-Platte ist, wobei n ungeradzahlig und insbesondere n=1 ist.

**8.** Projektionsvorrichtung (10) nach einem der vorhergehenden Ansprüche,
**dadurch gekennzeichnet,**
**dass** die erste Strahlung bevor sie zum zweiten Mal auf die polarisationsabhängige Spiegelvorrichtung ($18_B$) trifft, eine Polarisationsrichtung (p; s) aufweist, die zur ersten Polarisationsrichtung (s; p) senkrecht ist.

9. Projektionsvorrichtung (10) nach Anspruch 8,
**dadurch gekennzeichnet,**
**dass** die erste Polarisationsrichtung eine s-Polarisation ist.

10. Projektionsvorrichtung (10) nach einem der Ansprüche 8 oder 9,
**dadurch gekennzeichnet,**
**dass** die erste Strahlung bevor sie zum zweiten Mal auf die polarisationsabhängige Spiegelvorrichtung ($18_B$) trifft, p-polarisiert ist.

11. Projektionsvorrichtung (10) nach Anspruch 11,
**dadurch gekennzeichnet,**
**dass** die erste Polarisationsrichtung eine p-Polarisation ist.

12. Projektionsvorrichtung (10) nach einem der Ansprüche 11 oder 14,
**dadurch gekennzeichnet,**
**dass** die erste Strahlung bevor sie zum zweiten Mal auf die polarisationsabhängige Spiegelvorrichtung ($18_B$) trifft, s-polarisiert ist.

13. Projektionsvorrichtung (10) nach einem der vorhergehenden Ansprüche,
**dadurch gekennzeichnet,**
**dass** die Projektionsvorrichtung (10) aufweist:

   - n erste Laservorrichtungen ($12_{B1}$, $12_{G1}$, $12_{R1}$) , mit n $\in$ N;
   - n zweite Laservorrichtungen ($12_{B2}$, $12_{G2}$, $12_{R2}$) , mit n $\in$ N;

wobei die jeweils i-te erste Laservorrichtung ($12_{B1}$; $12_{G1}$; $12_{R1}$) der jeweils i-ten zweiten Laservorrichtung ($12_{B2}$; $12_{G2}$; $12_{R2}$) gegenüberliegend angeordnet ist, mit i = 1 bis n.

14. Projektionsvorrichtung (10) nach Anspruch 16,
**dadurch gekennzeichnet,**
**dass** eine i-te polarisationsabhängige Spiegelvorrichtung ($18_B$; $18_G$; $18_R$) zwischen der i-ten ersten ($12_{B1}$; $12_{G1}$; $12_{R1}$)und der i-ten zweiten Laservorrichtung ($12_{B2}$; $12_{G2}$; $12_{R2}$) angeordnet ist, mit i = 1 bis n.

15. Projektionsvorrichtung (10) nach einem der Ansprüche 16 oder 17,
**dadurch gekennzeichnet,**
**dass** die i-te erste Laservorrichtung ($12_{B1}$; $12_{G1}$; $12_{R1}$) und die i-te zweite Laservorrichtung ($12_{B2}$; $12_{G2}$; $12_{R2}$) ausgelegt sind, Strahlung in einem i-ten Wellenlängenbereich abzugeben, mit i = 1 bis n.

16. Projektionsvorrichtung (10) nach Anspruch 18,
**dadurch gekennzeichnet,**
**dass** n = 3 ist, wobei der erste Wellenlängenbereich im roten Spektrum, der zweite Wellenlängenbereich im grünen Spektrum und der dritte Wellenlängenbereich im blauen Spektrum liegt.

17. Projektionsvorrichtung (10) nach einem der vorhergehenden Ansprüche,
**dadurch gekennzeichnet,**
**dass** zwischen der jeweiligen Laservorrichtung ($12_{B1}$; $12_{G1}$; $12_{R1}$; $12_{B2}$ ; $12_{G2}$ ; $12_{R2}$) und der zugeordneten polarisationsabhängigen Spiegelvorrichtung ($18_B$; $18_G$; $18_R$) eine optische Vorrichtung ($14_{B1}$; $14_{G1}$; $14_{R1}$, $14_{B2}$; $14_{G2}$; $14_{R2}$), insbesondere eine Linse, angeordnet ist.

**Claims**

1. Projection device (10) comprising

   - at least one first laser device ($12_{B1}$) for emitting a first radiation having a first direction of polarization (s; p); and
   - at least one second laser device ($12_{B2}$) for emitting a second radiation having the first direction of polarization (s; p);

wherein the first laser device ($12_{B1}$) and the second laser device ($12_{B2}$) are arranged opposite one another and wherein the projection device (10) furthermore comprises:

- a prism (16) arranged between the first laser device ($12_{B1}$) and the second laser device ($12_{B2}$) and having a first boundary surface (21) facing the first laser device ($12_{B1}$) and a second boundary surface (23) facing the second laser device ($12_{B2}$),
wherein at least one polarization-dependent mirror device ($18_B$) is arranged in the prism (16) and is designed in such a way that radiation having the first direction of polarization (s; p) is reflected after impinging on the polarization-dependent mirror device ($18_B$), wherein the polarization-dependent mirror device ($18_B$) is arranged between the first laser device ($12_{B1}$) and the second laser device ($12_{B2}$) in such a way that the first radiation and the second radiation run oppositely to one another after reflection at the polarization-dependent mirror device ($18_B$);
- at least one polarization modification device (20) wherein the polarization modification device (20) is designed to modify the direction of polarization (s; p) of radiation in such a way that it passes through the polarization-dependent mirror device ($18_B$) without reflection; and
- at least one further mirror device (22);

wherein the polarization modification device (20) and the further mirror device (22) are arranged in the beam path of the first radiation after a first and before a second impingement on the polarization-dependent mirror device ($18_B$), **characterized in that** the first boundary surface (21) of the prism (16) forms a predefinable angle not equal to 90° with the optical axis of the first laser device ($12_{B1}$) and the second boundary surface (23) of the prism (16) runs parallel to the first boundary surface (21),
the prism (16) has a third boundary surface (26), which faces the polarization modification device (20) and the further mirror device (22), and also a fourth boundary surface (24) which constitutes the output of the projection device (10), wherein a first predefinable plane (E1) is defined by the extension direction of the polarization modification device (20) and of the further mirror device (22),
wherein a second predefinable plane (E2) is defined by the third boundary surface (26),
wherein the first predefinable plane (E1) and the second predefinable plane (E2) are chosen in such a way that the third boundary surface (26) and the fourth boundary surface (24) are not arranged perpendicularly to the first boundary srrface (21) and the second boundary surface (23) and that the first radiation emerging from the prism (16) in the direction of the further mirror device (22) and the second radiation reflected back by the further mirror device (22) run perpendicularly to the optical axis of the first laser device ($12_{B1}$) and of the second laser device ($12_{B2}$) before entering into the prism (16).

2. Projection device (10) according to Claim 4,
**characterized**
**in that** the fourth boundary surface (24) runs parallel to the third boundary surface (26).

3. Projection device (10) according to either of Claims 1 and 2,
**characterized**
**in that** the exit surface angle ($\gamma$) of the prism (16) on the side of the third boundary surface (26) and/or on the side of the fourth boundary surface is between 2° and 3°, in particular 2.3°.

4. Projection device (10) according to any of the preceding claims,
**characterized**
**in that** the absolute value of the difference between the predefinable angle and 90° is between 0.1° and 1.5°, preferably between 0.6° and 1.5°.

5. Projection device (10) according to any of the preceding claims,
**characterized**
**in that** the polarization modification device (20) is designed in such a way that the first radiation, after passing through the polarization modification device (20) at least twice is polarized in such a way that it passes through the polarization-dependent mirror device ($18_B$) without reflection.

6. The projection device (10) according to any of the preceding claims,

**characterized**
**in that** the polarization-dependent mirror device ($18_B$) is arranged in such a way that the first radiation, after first passage through the polarization modification device (20) is specularly reflected at the further mirror device (22), subsequently passes through the polarization modification device (20) a second time and, after the second passage, impinges on the polarization-dependent mirror device ($18_B$) a second time.

7. Projection device (10) according to any of the preceding claims,
   **characterized**
   **in that** the polarization modification device (20) is an n*lambda/4 plate, wherein n is odd, and in particular n=1.

8. Projection device (10) according to any of the preceding claims,
   **characterized**
   **in that** the first radiation, before it impinges on the polarization-dependent mirror device ($18_B$) the second time, has a direction of polarization (p; s) which is perpendicular to the first direction of polarization (s; p).

9. Projection device (10) according to Claim 8,
   **characterized**
   **in that** the first direction of polarization is an s-polarization.

10. Projection device (10) according to either of Claims 8 and 9,
    **characterized**
    **in that** the first radiation is p-polarized before it impinges on the polarization-dependent mirror device ($18_B$) the second time.

11. Projection device (10) according to Claim 11,
    **characterized**
    **in that** the first direction of polarization is a p-polarization.

12. Projection device (10) according to either of Claims 11 and 14,
    **characterized**
    **in that** the first radiation is s-polarized before it impinges on the polarization-dependent mirror device ($18_B$) the second time.

13. Projection device (10) according to any of the preceding claims,
    **characterized**
    **in that** the projection device (10) comprises:

    - n first laser devices ($12_{B1}$, $12_{G1}$, $12_{R1}$), where n $\in$ N;
    - n second laser devices ($12_{B2}$, $12_{G2}$, $12_{R2}$) where n $\in$ N;

    wherein the respective i-th first laser device ($12_{B1}$; $12_{G1}$; $12_{R1}$) is arranged opposite the respective i-th second laser device ($12_{B2}$; $12_{G2}$; $12_{R2}$), where i = 1 to n.

14. Projection device (10) according to Claim 16,
    **characterized**
    **in that** an i-th polarization-dependent mirror device ($18_B$; $18_G$; $18_R$) is arranged between the i-th first laser device ($12_{B1}$; $12_{G1}$; $12_{R1}$) and the i-th second laser device ($12_{B2}$; $12_{G2}$; $12_{R2}$), where i = 1 to n.

15. Projection device (10) according to either of Claims 16 and 17,
    **characterized**
    **in that** the i-th first laser device ($12_{B1}$; $12_{G1}$; $12_{R1}$) and the i-th second laser device ($12_{B2}$; $12_{G2}$; $12_{R2}$) are designed to emit radiation in an i-th wavelength range, where i = 1 to n.

16. The projection device (10) according to Claim 18,
    **characterized**
    **in that** n = 3, wherein the first wavelength range lies in the red spectrum, the second wavelength range lies in the green spectrum and the third wavelength range lies in the blue spectrum.

**17.** Projection device (10) according to any of the preceding claims,
**characterized**
**in that** an optical device ($14_{B1}$; $14_{G1}$; $14_{R1}$, $14_{B2}$; $14_{G2}$; $14_{R2}$) , in particular a lens, is arranged between the respective laser device ($12_{B1}$; $12_{G1}$; $12_{R1}$; $12_{B2}$; $12_{G2}$; $12_{R2}$) and the assigned polarization-dependent mirror device ($18_B$; $18_G$; $18_R$) .

## Revendications

**1.** Dispositif de projection (10) comprenant

- au moins un premier dispositif laser ($12_{B1}$) pour l'émission d'un premier rayonnement d'une première direction de polarisation (s; p) ; et
- au moins un second dispositif laser ($12_{B2}$) pour l'émission d'un second rayonnement de la première direction de polarisation (s; p) ;

le premier ($12_{B1}$) et le second dispositif laser ($12_{B2}$) étant disposés en regard l'un de l'autre et le dispositif de projection (10) comprenant, en outre :

- un prisme (16) situé entre le premier ($12_{B1}$) et le second dispositif laser ($12_{B2}$), comportant une première surface de limitation (21) tournée vers le premier dispositif laser ($12_{B1}$) et une deuxième surface de limitation (23) tournée vers le second dispositif laser ($12_{B2}$) ,
au moins un dispositif miroir dépendant de la polarisation ($18_B$) étant agencé dans le prisme (16), lequel dispositif miroir est réalisé de façon qu'un rayonnement de la première direction de polarisation (s; p) soit réfléchi après l'impact sur le dispositif miroir dépendant de la polarisation ($18_B$), le dispositif miroir dépendant de la polarisation ($18_B$) étant disposé entre le premier ($12_{B1}$) et le second dispositif laser ($12_{B2}$) de façon que le premier et le second rayonnement circulent dans des directions opposées l'un par rapport à l'autre après la réflexion sur le dispositif miroir dépendant de la polarisation ($18_B$) ;
- au moins un dispositif de modification de polarisation (20), le dispositif de modification de polarisation (20) étant conçu pour modifier la direction de polarisation (s; p) du rayonnement de façon que celui-ci franchisse sans réflexion le dispositif miroir dépendant de la polarisation ($18_B$) ; et
- au moins un dispositif miroir supplémentaire (22) ;

le dispositif de modification de polarisation (20) et le dispositif miroir supplémentaire (22) étant situés dans le trajet des rayons du premier rayonnement après un premier impact et avant un second impact sur le dispositif miroir dépendant de la polarisation ($18_B$),
**caractérisé en ce que**
la première surface de limitation (21) du prisme (16) forme avec l'axe optique du premier dispositif laser ($12_{B1}$) un angle pouvant être prédéterminé différent de 90° et la deuxième surface de limitation (23) du prisme (16) s'étend parallèlement à la première surface de limitation (21),
le prisme (16) comporte une troisième surface de limitation (26) qui est tournée vers le dispositif de modification de polarisation (20) et le dispositif miroir supplémentaire (22), ainsi qu'une quatrième surface de limitation (24) qui représente la sortie du dispositif de projection (10),
la direction d'étendue du dispositif de modification de polarisation (20) et du dispositif miroir supplémentaire (22) définissant un premier plan pouvant être prédéterminé (E1),
la troisième surface de limitation (26) définissant un second plan pouvant être prédéterminé (E2),
le premier (E1) et le second plan pouvant être prédéterminé (E2) étant choisis de manière à ce que la troisième surface de limitation (26) et la quatrième surface de limitation (24) ne soient pas perpendiculaires à la première (21) et à la deuxième (23) surface de limitation,
**en ce que** le premier rayonnement sortant du prisme (16) en direction du dispositif miroir supplémentaire (22) et le second rayonnement réfléchi par le dispositif miroir supplémentaire (22) circulent perpendiculairement à l'axe optique du premier ($12_{B1}$) et du second dispositif laser ($12_{B2}$) avant l'entrée dans le prisme (16).

**2.** Dispositif de projection (10) selon la revendication 1, **caractérisé**
**en ce que** la quatrième surface de limitation (24) s'étend parallèlement à la troisième surface de limitation (26).

**3.** Dispositif de projection (10) selon l'une des revendications 1 ou 2, **caractérisé**
**en ce que** l'angle de surface de sortie ($\gamma$) du prisme (16) sur le côté de la troisième surface de limitation (26) et/ou sur le côté de la quatrième surface de limitation mesure entre 2° et 3°, en particulier 2,3°.

4. Dispositif de projection (10) selon l'une des revendications précédentes, **caractérisé en ce que** la grandeur de la différence entre l'angle pouvant être prédéterminé et 90° est comprise entre 0,1° et 1,5°, de préférence entre 0,6° et 1,5°.

5. Dispositif de projection (10) selon l'une des revendications précédentes, **caractérisé en ce que** le dispositif de modification de polarisation (20) est réalisé de manière à ce que le premier rayonnement soit, après au moins un double franchissement du dispositif de modification de polarisation (20), polarisé de telle sorte qu'il franchisse sans réflexion le dispositif miroir dépendant de la polarisation (18$_B$).

6. Dispositif de projection (10) selon l'une des revendications précédentes, **caractérisé en ce que** le dispositif miroir dépendant de la polarisation (18$_B$) est agencé de manière à ce que le premier rayonnement soit réfléchi sur le dispositif miroir supplémentaire (22) après un premier franchissement du dispositif de modification de polarisation (20), franchisse ensuite une seconde fois le dispositif de modification de polarisation (20) et, après le second franchissement, rencontre une deuxième fois le dispositif miroir dépendant de la polarisation (18$_B$).

7. Dispositif de projection (10) selon l'une des revendications précédentes, **caractérisé en ce que** le dispositif de modification de polarisation (20) est une plaque n*lambda/4, n étant un nombre impair et, notamment, n=1.

8. Dispositif de projection (10) selon l'une des revendications précédentes, **caractérisé en ce que** le premier rayonnement, avant de rencontrer pour la deuxième fois le dispositif miroir dépendant de la polarisation (18$_B$) , a une direction de polarisation (p; s) qui est perpendiculaire à la première direction de polarisation (s; p).

9. Dispositif de projection (10) selon la revendication 8, **caractérisé en ce que** le la première direction de polarisation est une polarisation s.

10. Dispositif de projection (10) selon l'une des revendications 8 ou 9, **caractérisé en ce que** le premier rayonnement, avant de rencontrer pour la deuxième fois le dispositif miroir dépendant de la polarisation (18$_B$), est polarisé p.

11. Dispositif de projection (10) selon la revendication 11, **caractérisé en ce que** le la première direction de polarisation est une polarisation p.

12. Dispositif de projection (10) selon l'une des revendications 11 ou 14, **caractérisé en ce que** le premier rayonnement, avant de rencontrer pour la deuxième fois le dispositif miroir dépendant de la polarisation (18$_B$), est polarisé s.

13. Dispositif de projection (10) selon l'une des revendications précédentes, **caractérisé en ce que** le dispositif de projection (10) comprend :

    - n premiers dispositifs laser (12$_{B1}$, 12$_{G1}$, 12$_{R1}$) , avec n ∈ N ;
    - n seconds dispositifs laser (12$_{B2}$, 12$_{G2}$, 12$_{R2}$) , avec n ∈ N ;

    le i$^e$ premier dispositif laser respectif (12$_{B1}$; 12$_{G1}$; 12$_{R1}$) étant disposé en regard du i$^e$ second dispositif laser respectif (12$_{B2}$; 12$_{G2}$; 12$_{R2}$) , avec i = 1 à n.

14. Dispositif de projection (10) selon la revendication 16, **caractérisé en ce qu'**un i$^e$ dispositif miroir dépendant de la polarisation (18$_B$; 18$_G$; 18$_R$) est disposé entre le i$^e$ premier (12$_{B1}$; 12$_{G1}$; 12$_{R1}$) et le i$^e$ second dispositif laser (12$_{B2}$; 12$_{G2}$; 12$_{R2}$) , avec i = 1 à n.

15. Dispositif de projection (10) selon l'une des revendications 16 ou 17, **caractérisé en ce que** le i$^e$ premier dispositif laser (12$_{B1}$; 12$_{G1}$; 12$_{R1}$) et le i$^e$ second dispositif laser (12$_{B2}$; 12$_{G2}$; 12$_{R2}$) sont conçus pour émettre un rayonnement dans une i$^e$ gamme de longueurs d'onde, avec i = 1 à n.

**16.** Dispositif de projection (10) selon la revendication 18, **caractérisé en ce que** n = 3, la première gamme de longueurs d'onde se situant dans le spectre rouge, la deuxième gamme de longueurs d'onde se situant dans le spectre vert et la troisième gamme de longueurs d'onde se situant dans le spectre bleu.

**17.** Dispositif de projection (10) selon l'une des revendications précédentes, **caractérisé en ce qu'**un dispositif optique ($14_{B1}$; $14_{G1}$; $14_{R1}$, $14_{B2}$; $14_{G2}$; $14_{R2}$), notamment une lentille, est disposé entre le dispositif laser respectif ($12_{B1}$; $12_{G1}$; $12_{R1}$; $12_{B2}$; $12_{G2}$; $12_{R2}$) et le dispositif miroir dépendant de la polarisation ($18_B$; $18_G$; $18_R$) correspondant.

Fig.1
(SdT)

Fig.2

EP 2 802 928 B1

p-Polarisation
s-Polarisation

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080174868 A
- DE 102011087184